(19) Europäisches Patentamt / European Patent Office / Office européen des brevets

(11) **EP 3 950 863 A1**

(12) **EUROPEAN PATENT APPLICATION**
published in accordance with Art. 153(4) EPC

(43) Date of publication:
**09.02.2022 Bulletin 2022/06**

(21) Application number: **20777595.8**

(22) Date of filing: **13.03.2020**

(51) International Patent Classification (IPC):
**C09D 175/04** (2006.01)   **C08G 18/00** (2006.01)
**C08G 18/10** (2006.01)   **C08G 18/65** (2006.01)

(52) Cooperative Patent Classification (CPC):
**C08G 18/00; C08G 18/10; C08G 18/65;
C09D 175/04**

(86) International application number:
**PCT/JP2020/011146**

(87) International publication number:
**WO 2020/195964 (01.10.2020 Gazette 2020/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.03.2019 JP 2019057542**

(71) Applicant: **DKS Co. Ltd.
Kyoto-shi, Kyoto 600-8873 (JP)**

(72) Inventor: **WATANABE, Toshiya
Kyoto-shi, Kyoto 600-8873 (JP)**

(74) Representative: **Kuhnen & Wacker
Patent- und Rechtsanwaltsbüro PartG mbB
Prinz-Ludwig-Straße 40A
85354 Freising (DE)**

(54) **AQUEOUS POLYURETHANE DISPERSION AND COATING AGENT**

(57)     Provided are an aqueous polyurethane dispersion and a coating agent including the same, which can produce a coating film with excellent balance of various physical properties and especially excellent self-restoring properties. It is the aqueous polyurethane dispersion in which a polyurethane (C) obtained by reacting a urethane prepolymer (A) obtained by reacting a polyisocyanate (a), a polyol (b), and a hydrophilic group-containing polyol (c) with a chain extender (B) is dispersed in water, the urethane prepolymer (A) having a weight average molecular weight of 2,000 or more and 30,000 or less, the polyurethane (C) having a degree of crosslinking of 0.03 mol/kg or more and 0.15 mol/kg or less, the polyurethane (C) having a urea content of 0.5 mol/kg or less.

EP 3 950 863 A1

**Description**

Cross-Reference to Related Applications

The present application is based on Japanese Application No. 2019-057542, filed on March 26, 2019, the contents of which is hereby incorporated herein by reference.

[Technical Field]

The present disclosure relates to an aqueous polyurethane dispersion and a coating agent.

[Background Art]

Aqueous polyurethane dispersions are widely used as raw materials for coating materials or coating agents, for example, raw materials for coating materials or coating agents for interiors and exteriors of aircrafts, automobiles, or the like, coating materials or coating agents for outer wall surfaces and floor materials of houses, and the like. Thus, aqueous polyurethane dispersions are required to give coating films having various properties (e.g. hardness, strength, durability, and the like) depending on their applications, purposes, and the like.

For example, PTL 1 discloses a water-dispersible urethane prepolymer and a resin which can give a coating film excellent in oil resistance, hydrolysis resistance, weather resistance, folding processability, and self-restoring properties. The water-dispersible urethane prepolymer is a reaction product of (a) an organic isocyanate, (b) a polycarbonate diol, and (c) a compound having one hydrophilic center and at least two isocyanate-reactive groups, and in the polycarbonate diol (b), predetermined three types of repeating units are present at a predetermined ratio (molar ratio), and the proportion of primary end OH is 95 to 99.5%.

[Citation List]

[Patent Literature]

[PTL 1] JP 2013-18805 A

[Summary of Invention]

[Technical Problem]

However, while a coating film excellent in balance of physical properties such as oil resistance, hydrolysis resistance, weather resistance, and flexibility can be obtained, there has not been an aqueous polyurethane dispersion which can give a coating film having sufficient folding processability and self-restoring properties.

The present disclosure has been made in view of the above circumstances, and an object of the present disclosure is to provide an aqueous polyurethane dispersion which can give a coating film excellent in balance of various physical properties and particularly excellent in self-restoring properties, and a coating agent containing the aqueous polyurethane dispersion.

The present disclosure includes the following [1] to [13].

[1] An aqueous polyurethane dispersion in which a polyurethane (C) obtained by reacting a urethane prepolymer (A) obtained by reacting a polyisocyanate (a), a polyol (b), and a hydrophilic group-containing polyol (c) with a chain extender (B) is dispersed in water,

the urethane prepolymer (A) having a weight average molecular weight of 2,000 or more and 30,000 or less,
the polyurethane (C) having a degree of crosslinking of 0.03 mol/kg or more and 0.15 mol/kg or less,
the polyurethane (C) having a urea content of 0.5 mol/kg or less.

[2] The aqueous polyurethane dispersion according to [1], wherein the urethane prepolymer (A) has a weight average molecular weight of 5,000 or more and 15,000 or less.
[3] The aqueous polyurethane dispersion according to [1] or [2], wherein the polyurethane (C) has a degree of crosslinking of 0.05 mol/kg or more and 0.10 mol/kg or less.
[4] The aqueous polyurethane dispersion according to any one of [1] to [3], wherein the polyurethane (C) has a urea bond content of 0.1 mol/kg or more and 0.25 mol/kg or less.

[5] The aqueous polyurethane dispersion according to any one of [1] to [4], wherein the polyisocyanate (a) contains an alicyclic polyisocyanate.

[6] The aqueous polyurethane dispersion according to any one of [1] to [5], wherein the polyol (b) contains at least one selected from the group consisting of a polyester polyol, a polycarbonate diol, and a polyether polyol.

[7] The aqueous polyurethane dispersion according to any one of [1] to [6], wherein the polyol (b) has a number average molecular weight of 400 or more and 3,000 or less.

[8] The aqueous polyurethane dispersion according to any one of [1] to [7], wherein the hydrophilic group in the hydrophilic group-containing polyol (c) is an anionic hydrophilic group.

[9] The aqueous polyurethane dispersion according to [8], wherein the polyurethane (C) has an acid value of 10 mg KOH/g or more and 45 mg KOH/g or less.

[10] The aqueous polyurethane dispersion according to any one of [1] to [9], wherein the urethane prepolymer (A) contains the polyisocyanate (a) in an amount of 15 parts by mass or more and 45 parts by mass or less based on 100 parts by mass of the urethane prepolymer (A).

[11] The aqueous polyurethane dispersion according to any one of [1] to [10], wherein the urethane prepolymer (A) contains the polyol (b) in an amount of 50 parts by mass or more and 80 parts by mass or less based on 100 parts by mass of the urethane prepolymer (A).

[12] The aqueous polyurethane dispersion according to any one of [1] to [11], wherein the urethane prepolymer (A) contains the hydrophilic group-containing polyol (c) in an amount of 1 part by mass or more and 10 parts by mass or less based on 100 parts by mass of the urethane prepolymer (A).

[13] The aqueous polyurethane dispersion according to any one of [1] to [12], wherein the chain extender (B) contains a polyamine.

[14] The aqueous polyurethane dispersion according to any one of [1] to [13], wherein the polyurethane (C) contains the chain extender (B) in an amount of 0.4 parts by mass or more and 1.0 part by mass or less based on 100 parts by mass of the urethane prepolymer (A).

[15] A coating agent including the aqueous polyurethane dispersion according to any one of [1] to [14].

According to the present disclosure, it is possible to provide an aqueous polyurethane dispersion and a coating agent including the same, which can produce a coating film with excellent balance of various physical properties and especially excellent self-restoring properties.

[Solution to Problem]

[Description of Embodiments]

In an aqueous polyurethane dispersion of the present disclosure, a polyurethane (C) obtained by reacting a urethane prepolymer (A) obtained by reacting a polyisocyanate (a), a polyol (b) and a hydrophilic group-containing polyol (c) with a chain extender (B) is dispersed in water. That is, the aqueous polyurethane dispersion of the present disclosure is an aqueous polyurethane dispersion in which the polyurethane (C) obtained by reacting the urethane prepolymer (A) with the chain extender (B) is dispersed in water. The urethane prepolymer (A) is obtained by reacting the polyisocyanate (a), the polyol (b), and the hydrophilic group-containing polyol (c).

The polyisocyanate (a) is not particularly limited, and polyisocyanates which are commonly used in the art can be used. Specific examples thereof include aliphatic polyisocyanates, alicyclic polyisocyanates, aromatic polyisocyanates, and araliphatic polyisocyanates.

Examples of the aliphatic polyisocyanate include tetramethylene diisocyanate, dodecamethylene diisocyanate, hexamethylene diisocyanate, 2,2,4-trimethylhexamethylene diisocyanate, 2,4,4-trimethylhexamethylene diisocyanate, lysine diisocyanate, 2-methylpentane-1,5-diisocyanate, and 3-methylpentane-1,5-diisocyanate.

Examples of the alicyclic polyisocyanate include isophorone diisocyanate, hydrogenated xylylene diisocyanate, 4,4'-dicyclohexylmethane diisocyanate, 1,4-cyclohexane diisocyanate, methylcyclohexylene diisocyanate, and 1,3-bis(isocyanate methyl)cyclohexane. 4,4'-dicyclohexylmethane diisocyanate is also referred to simply as dicyclohexylmethane diisocyanate.

Examples of the aromatic polyisocyanate include tolylene diisocyanate, 2,2'-diphenylmethane diisocyanate, 2,4'-diphenylmethane diisocyanate, 4,4'-diphenylmethane diisocyanate (MDI), 4,4'-dibenzyl diisocyanate, 1,5-naphthylene diisocyanate, xylylene diisocyanate, 1,3-phenylene diisocyanate, and 1,4-phenylene diisocyanate.

Examples of the araliphatic polyisocyanate include dialkyldiphenylmethane diisocyanate, tetraalkyldiphenylmethane diisocyanate, and $\alpha,\alpha,\alpha,\alpha$-tetramethylxylylene diisocyanate.

Examples of the polyisocyanate include dimers and trimers of these polyisocyanates, and modified products such as biuret-formed isocyanates. These polyisocyanates (a) may be used alone or in combination of two or more thereof.

Among the polyisocyanates, alicyclic polyisocyanates are preferable, and 4,4'-dicyclohexylmethane diisocyanate and 1,4-cyclohexane diisocyanate are particularly preferable, from the viewpoint of scratch resistance and solvent resistance.

The content of the polyisocyanate (a) in the urethane prepolymer (A) according to the present disclosure is not particularly limited. The urethane prepolymer (A) may contain the polyisocyanate (a) in an amount of preferably 10 parts by mass or more, more preferably 15 parts by mass or more, still more preferably 20 parts by mass or more, particularly preferably 25 parts by mass or more, based on 100 parts by mass of the urethane prepolymer (A). The urethane prepolymer (A) may contain the polyisocyanate (a) in an amount of preferably 50 parts by mass or less, more preferably 45 parts by mass or less, still more preferably 50 parts by mass or less, and particularly preferably 25 parts by mass or less based on 100 parts by mass of the urethane prepolymer (A). For example, the urethane prepolymer (A) may contain the polyisocyanate (a) in an amount of 15 parts by mass or more and 45 parts by mass or less based on 100 parts by mass of the urethane prepolymer (A).

As the polyol (b), for example, (b1) a polyester polyol, (b2) a polycarbonate diol, (b3) a polyether polyol, or the like can be used. The polyol (b) may contain at least one selected from the group consisting of (b1) a polyester polyol, (b2) a polycarbonate diol, and (b3) a polyether polyol.

As the polyester polyol (bl), for example, compounds obtained by esterification reaction of a low-molecular-weight polyol with a polycarboxylic acid, compounds obtained by ring-opening polymerization reaction of a cyclic ester compound such as ε-caprolactone or γ-valerolactone, and copolyesters thereof can be used.

As the low-molecular-weight polyol, aliphatic polyols such as ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, 2,3-butanediol, 1,5-pentanediol, 1,5-hexanediol, 1,6-hexanediol, 2,5-hexanediol, 1,7-heptanediol, 1,8-octanediol, 1,9-nonanediol, 1,10 decanediol, 1,11-undecanediol, 1,12-dodecanediol, 2-methyl-1,3-propanediol, neopentyl glycol, 2-butyl-2-ethyl-1,3-propanediol, 3-methyl-1,5-pentanediol, 2-ethyl-1,3-hexanediol, 2-methyl-1,8-octanediol, glycerin, trimethylolpropane, ditrimethylolpropane, tritrimethylolpropane, and pentaerythritol; aliphatic cyclic structure-containing polyols such as 1,4-cyclohexanedimethanol and hydrogenated bisphenol A; and bisphenol type polyols such as bisphenol A, alkylene oxide adducts of bisphenol A, bisphenol S, and alkylene oxide adducts of bisphenol S can be used. Of these, aliphatic polyols are preferably used from the viewpoint of scratch resistance and solvent resistance.

As the polycarboxylic acid, aliphatic polycarboxylic acids such as succinic acid, adipic acid, suberic acid, azelaic acid, sebacic acid, dodecanedicarboxylic acid, and dimer acid; alicyclic polycarboxylic acids such as 1,4-cyclohexanedicarboxylic acid and cyclohexanetricarboxylic acid; aromatic polycarboxylic acids such as orthophthalic acid, isophthalic acid, terephthalic acid, 1,4-naphthalenedicarboxylic acid, 2,3-naphthalenedicarboxylic acid, 2,6-naphthalenedicarboxylic acid, biphenyldicarboxylic acid, trimellitic acid, and pyromellitic acid; and anhydrides or ester derivatives thereof can be used alone or in combination of two or more thereof, and of these, aliphatic polycarboxylic acids are preferably used from the viewpoint of scratch resistance and solvent resistance.

As the (b2) polycarbonate diol, for example, those obtained by reacting a carbonic acid ester and/or phosgene with a polyol described later can be used. As the carbonic acid ester, for example, dimethyl carbonate, diethyl carbonate, methylethyl carbonate, ethylene carbonate, propylene carbonate, butylene carbonate, diphenyl carbonate, dinaphthyl carbonate, phenyl naphthyl carbonate, and the like can be used.

As the polyol used for obtaining the (b2) polycarbonate diol, low-molecular-weight dihydroxy compounds such as ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, 2,3-butanediol, 1,5-pentanediol, 1,5-hexanediol, 1,6-hexanediol, 2,5-hexanediol, 1,7-heptanediol, 1,8-octanediol, 1,9-nonanediol, 1,10-decanediol, 1,11-undecanediol, 1,12-dodecanediol, 2-methyl-1,3-propanediol, neopentyl glycol, 2-butyl-2-ethyl-1,3-propanediol, 3-methyl-1,5-pentanediol, 2-ethyl-1,3-hexanediol, 2-methyl-1,8-octanediol, 1,4-cyclohexanedimethanol, hydroquinone, resorcin, bisphenol A, bisphenol F, and 4,4'-biphenol; polyether polyols such as polyethylene glycol, polypropylene glycol, and polytetramethylene glycol; and polyester polyols such as polyhexamethylene adipate, polyhexamethylene succinate, and polycaprolactone can be used.

As the (b3) polyether polyol, for example, those obtained by addition polymerization of an alkylene oxide using one or more of compounds having two or more active hydrogen atoms as an initiator can be used. As the polyether polyol (b3), for example, polyethylene glycol, polypropylene glycol, polytetramethylene glycol, and the like can be used.

Examples of the initiator include water, ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, 2,3-butanediol, 1,5-pentanediol, 1,5-hexanediol, 1,6-hexanediol, 2,5-hexanediol, 1,7-heptanediol, 1,8-octanediol, 1,9-nonanediol, 1,10-decanediol, 1,11-undecanediol, 1,12-dodecanediol, 2-methyl-1,3-propanediol, neopentyl glycol, 2-butyl-2-ethyl-1,3-propanediol, 3-methyl-1,5-pentanediol, 2-ethyl-1,3-hexanediol, 2-methyl-1,8-octanediol, glycerin, diglycerin, trimethylolpropane, ditrimethylolpropane, tritrimethylolpropane, 1,2,6-hexanetriol, triethanolamine, triisopropanolamine, pentaerythritol, dipentaerythritol, sorbitol, saccharose, ethylenediamine, N-ethyldiethylenetriamine, 1,2-diaminopropane, 1,3-diaminopropane, 1,2-diaminobutane, 1,3-diaminobutane, 1,4-diaminobutane, diethylenetriamine, phosphoric acid, acidic phosphoric acid esters, and the like can be used.

Examples of the alkylene oxide include ethylene oxide, propylene oxide, butylene oxide, styrene oxide, epichlorohydrin, and tetrahydrofuran.

In the present disclosure, the (b) polyol may contain a polyol having a number average molecular weight of 400 or less.

Examples of the polyol having a number average molecular weight of 400 or less include the following polyols among the above-described low-molecular-weight polyols. Specifically, examples thereof include ethylene glycol, diethylene glycol, triethylene glycol, 1,2-propylene glycol, 1,3-propylene glycol, neopentyl glycol, 1,3-butanediol, 1,4-butanediol, 3-methylpentanediol, 1,6-hexanediol, 1,8-octanediol, 2-methyl-1,3-propanediol, bisphenol A, hydrogenated bisphenol A, cyclohexanedimethanol, glycerin, and trimethylolpropane.

These polyols (b) may be used alone or in combination of two or more thereof.

The content of the polyol (b) in the urethane prepolymer (A) of the present disclosure is not particularly limited. The urethane prepolymer (A) may contain the polyol (b) in an amount of preferably 45 parts by mass or more, more preferably 50 parts by mass or more, still more preferably 55 parts by mass or more, particularly preferably 60 parts by mass or more, based on 100 parts by mass of the urethane prepolymer (A). The urethane prepolymer (A) may contain the polyol (b) in an amount of preferably 85 parts by mass or less, more preferably 80 parts by mass or less, still more preferably 75 parts by mass or less, and particularly preferably 70 parts by mass or less, based on 100 parts by mass of the urethane prepolymer (A). For example, the urethane prepolymer (A) may contain the polyol (b) in an amount of 50 parts by mass or more and 80 parts by mass or less based on 100 parts by mass of the urethane prepolymer (A).

The number average molecular weight of the polyol (b) in the urethane prepolymer (A) of the present disclosure is not particularly limited. The number average molecular weight of the polyol (b) is preferably 400 or more, more preferably 600 or more, still more preferably 800 or more. The number average molecular weight of the polyol (b) is preferably 3,000 or less, more preferably 2,500 or less, still more preferably 2,000 or less. For example, the number average molecular weight of the polyol (b) may be 400 or more and 3,000 or less.

Examples of the hydrophilic group of the hydrophilic group-containing polyol (c) include anionic hydrophilic groups, cationic hydrophilic groups, and nonionic hydrophilic groups. Specifically, examples of the anionic hydrophilic group include carboxyl groups and salts thereof, and sulfonic acid groups and salts thereof, examples of the cationic hydrophilic group include tertiary ammonium salts and quaternary ammonium salts, and examples of the nonionic hydrophilic group include groups including a repeating unit of ethylene oxide, groups including a repeating unit of ethylene oxide and a repeating unit of another alkylene oxide, and the like.

Examples of the polyol having a carboxyl group include, carboxylic acid-containing compounds such as 2,2-dimethylolpropionic acid, 2,2-dimethylolbutyric acid, 2,2-dimethylolvaleric acid, dioxymaleic acid, 2,6-dioxybenzoic acid, and 3,4-diaminobenzoic acid, derivatives thereof, and salts thereof, and polyester polyols obtained by use thereof. Further, examples thereof include amino acids such as alanine, aminobutyric acid, aminocaproic acid, glycine, glutamic acid, aspartic acid, and histidine, and carboxylic acids such as succinic acid, adipic acid, maleic anhydride, phthalic acid, and trimellitic anhydride. 2,2-dimethylolpropionic acid is also referred to simply as dimethylolpropionic acid.

Examples of the polyol having a sulfonic acid group or a salt thereof include sulfonic acid-containing compounds such as 2-oxyethanesulfonic acid, phenol sulfonic acid, sulfobenzoic acid, sulfosuccinic acid, 5-sulfoisophthalic acid, sulfanilic acid, 1,3-phenylenediamine-4,6-disulfonic acid, and 2,4-diaminotoluene-5-sulfonic acid, derivatives thereof, and polyester polyols, polyamide polyols, and polyamide polyester polyols obtained by copolymerizing the above-mentioned compounds.

By neutralizing any of these carboxyl groups or sulfonic acid groups to form a salt, the finally obtained polyurethane can be made water-dispersible. Examples of the neutralizing agent in this case include nonvolatile bases such as sodium hydroxide and potassium hydroxide, tertiary amines such as trimethylamine, triethylamine, dimethylethanolamine, methyldiethanolamine, and triethanolamine, and volatile bases such as ammonia. The neutralization can be performed before, during or after the urethanization reaction.

Examples of the polyol having a tertiary ammonium salt include alkanolamines such as methylaminoethanol and methyldiethanolamine. By neutralizing any of these polyols with an organic carboxylic acid such as formic acid or acetic acid or an inorganic acid such as hydrochloric acid or sulfuric acid to form a salt, the polyurethane can be made water-dispersible. The neutralization can be performed before, during or after the urethanization reaction.

The polyol having a quaternary ammonium salt is a compound obtained by quaternization of the alkanolamine such as methylaminoethanol or methyldiethanolamine with an alkyl halide such as methyl chloride or methyl bromide or a dialkyl sulfuric acid such as dimethyl sulfuric acid.

The polyol having a nonionic hydrophilic group is not particularly limited, and is preferably a compound containing a repeating unit of ethylene oxide at 30 wt% or more and having a number average molecular weight of 300 to 20,000, and examples thereof include nonionic group-containing compounds such as polyoxyethylene glycols or polyoxyethylene-polyoxypropylene copolymer glycols, polyoxyethylene-polyoxybutylene copolymer glycols, polyoxyethylene-polyoxyalkylene copolymer glycols, monoalkyl ethers thereof, and polyester polyether polyols obtained by copolymerizing these compounds.

Each of the hydrophilic group-containing polyols (c) may be used alone or in combination thereof.

When the hydrophilic group of the hydrophilic group-containing polyol (c) is an anionic hydrophilic group, the acid value of the polyurethane (C) is preferably 5 mg KOH/g or more, more preferably 10 mg KOH/g or more. On the other hand, the acid value of the polyurethane (C) is preferably 50 mg KOH/g or less, more preferably 45 mg KOH/g or less. The acid value is preferably within the above-described range from the viewpoint of water dispersibility and water resistance. The acid value (mg KOH/g) of the polyurethane (C) is a value measured on the basis of JIS K 0070:1992.

The content of the hydrophilic group-containing polyol (c) in the urethane prepolymer (A) according to the present disclosure is not particularly limited. The urethane prepolymer (A) may contain the hydrophilic group-containing polyol (c) in an amount of preferably 1 part by mass or more, more preferably 2 parts by mass or more, still more preferably 4 parts by mass or more, based on 100 parts by mass of the urethane prepolymer (A). The urethane prepolymer (A) may contain the hydrophilic group-containing polyol (c) in an amount of preferably 10 parts by mass or less, more preferably 8 parts by mass or less, still more preferably 6 parts by mass or less, based on 100 parts by mass of the urethane prepolymer (A). For example, the urethane prepolymer (A) may contain the hydrophilic group-containing polyol (c) in an amount of 1 part by mass or more and 10 parts by mass or less based on 100 parts by mass of the urethane prepolymer (A).

As the chain extender (B), a chain extender which is commonly used in the art can be used. The chain extender is not particularly limited, and specifically, a diamine or a polyamine can be used. Examples of the diamine include ethylenediamine, trimethylenediamine, piperazine, and isophoronediamine, and examples of the polyamine include diethylenetriamine, dipropylenetriamine, and triethylenetetramine. These chain extenders (B) may be used alone or in combination of two or more thereof. As the chain extender (B), a polyamine is preferably used. In the present disclosure, diethylenetriamine is more preferable from the viewpoint of scratch resistance.

The content of the chain extender (B) in the polyurethane (C) according to the present disclosure is not particularly limited. The polyurethane (C) may contain the chain extender (B) in an amount of preferably 0.1 parts by mass or more, more preferably 0.2 parts by mass or more, still more preferably 0.4 parts by mass or more, particularly preferably 0.6 parts by mass or more, based on 100 parts by mass of the urethane prepolymer (A). The polyurethane (C) may contain the chain extender (B) in an amount of preferably 2.0 parts by mass or less, more preferably 1.5 parts by mass or less, still more preferably 1.0 part by mass or less, particularly preferably 0.7 parts by mass or less, based on 100 parts by mass of the urethane prepolymer (A). For example, the polyurethane (C) may contain the chain extender (B) in an amount of 0.4 parts by mass or more and 1.0 parts by mass or less based on 100 parts by mass of the urethane prepolymer (A).

The method for producing the aqueous polyurethane dispersion of the present disclosure is not particularly limited, and generally includes: synthesizing a urethane prepolymer by reacting the polyol (b), the hydrophilic group-containing polyol (c), and the polyisocyanate (a) in a stoichiometrically excessive amount with respect to the total amount of hydroxyl groups and amino groups contained in the chain extender (B) where the equivalent ratio of isocyanate groups in the polyisocyanate (a) to the total amount of the hydroxyl groups and amino groups is 1 : 0.85 to 1.1, without a solvent or in an organic solvent having no active hydrogen group; then neutralizing an anionic hydrophilic group or a cationic hydrophilic group in the hydrophilic group-containing polyol (c); and then performing dispersion and emulsification in water. Thereafter, by adding the chain extender (B) is added to the extent that the equivalent ratio of the remaining isocyanate groups in the urethane prepolymer to the chain extender (B) is 1 : 0.5 to 0.9, the remaining isocyanate groups in the urethane prepolymer and the chain extender (B) are subjected to interfacial polymerization reaction to form a urea bond. Thereafter, by removing the used solvent if necessary, an aqueous polyurethane dispersion can be obtained.

The organic solvent having no active hydrogen group is not particularly limited, and specific examples thereof include dioxane, methyl ethyl ketone, dimethylformamide, tetrahydrofuran, N-methyl-2-pyrrolidone, toluene, and propylene glycol monomethyl ether acetate. It is preferable that these hydrophilic organic solvents used in the reaction are finally removed.

The weight average molecular weight of the urethane prepolymer (A) is 2,000 or more and 30,000 or less, and is preferably 3,000 or more, more preferably 5,000 or more, from the viewpoint of solvent resistance and scratch resistance. The weight average molecular weight is preferably 20,000 or less, more preferably 15,000 or less. The weight average molecular weight (Mw) of the urethane prepolymer (A) can be measured using gel permeation chromatography under the following conditions.

Apparatus: HLC-8120 manufactured by Tosoh Corporation
Column: two TSK GEL GMH6 columns manufactured by Tosoh Corporation
Measurement temperature: 40°C
Sample solution: 0.25 wt% tetrahydrofuran solution
Solution injection amount: 100 $\mu$L
Detection device: refractive index detector

Reference substance: Standard polystyrene (TSK standard POLYSTYRENE) manufactured by Tosoh Corporation, 12 types (molecular weights: 500, 1050, 2800, 5970, 9100, 18100, 37900, 96400, 190,000, 355000, 1,090,000 and 2,890,000)

The crosslinking degree of the polyurethane (C) is 0.03 mol/kg or more and 0.15 mol/kg or less, preferably 0.04 mol/g or more, and more preferably 0.05 mol/g or more, from the viewpoint of solvent resistance and scratch resistance. On the other hand, the content is preferably 0.12 mol/g or less, more preferably 0.10 mol/g or less. The degree of crosslinking is also called a crosslinking density.

The degree of crosslinking (mol/kg) of the polyurethane (C) can be calculated by the following method. Specifically, the degree of crosslinking, per molecular weight of 1000, of the polyurethane (C) obtained by reacting $W_{A1}$ g of the polyisocyanate (a) having a molecular weight $MW_{A1}$ and $F_{A1}$ functional groups, $W_{A2}$ g of the polyisocyanate (a) having a molecular weight $MW_{A2}$ and $F_{A2}$ functional groups, $W_{Aj}$ g of the polyisocyanate (a) having a molecular weight $MW_{Aj}$ and $F_{Aj}$ functional groups (j is an integer of 1 or more), $W_{B1}$ g of the polyol (b) having a molecular weight $MW_{B1}$ and $F_{B1}$ functional groups, $W_{B2}$ g of the polyol (b) having a molecular weight $MW_{B2}$ and $F_{B2}$ functional groups, $W_{Bk}$ g of the polyol (b) having a molecular weight $MW_{Bk}$ and $F_{Bk}$ functional groups (k is an integer of 1 or more), $W_{C1}$ g of the hydrophilic group-containing polyol (c) having a molecular weight $MWci$ and $F_{C1}$ functional groups, $W_{Cm}$ g of the hydrophilic group-containing polyol (c) having a molecular weight $MW_{Cm}$ and $F_{Cm}$ functional groups (m is an integer of 1 or more), $WD_1$ g of the chain extender (B) having a molecular weight $MW_{D1}$ and $F_{D1}$ functional groups, and $WD_n$ g of the chain extender (B) having a molecular weight $MW_{Dn}$ and $F_{Dn}$ functional groups (n is an integer of 1 or more) can be determined by calculation in accordance with the following expression.

[Math. 1]

$$
\text{Degree of crosslinking} = \left[ \frac{\{W_{A1}(F_{A1}-2)/MW_{A1}\}+\{W_{A2}(F_{A2}-2)/MW_{A2}\}+\cdots\cdots+\{W_{Aj}(F_{Aj}-2)/MW_{Aj}\}}{(W_{A1}+W_{A2}+\cdots\cdots+W_{Aj})+(W_{B1}+W_{B2}+\cdots\cdots+W_{Bk})+(W_{C1}+\cdots+W_{Cm})+(W_{D1}+\cdots+W_{Dn})} + \right.
$$

$$
\frac{\{W_{B1}(F_{B1}-2)/MW_{B1}\}+\{W_{B2}(F_{B2}-2)/MW_{B2}\}+\cdots\cdots+\{W_{Bk}(F_{Bk}-2)/MW_{Bk}\}}{(W_{A1}+W_{A2}+\cdots\cdots+W_{Aj})+(W_{B1}+W_{B2}+\cdots\cdots+W_{Bk})+(W_{C1}+\cdots+W_{Cm})+(W_{D1}+\cdots+W_{Dn})} +
$$

$$
\frac{\{W_{C1}(F_{C1}-2)/MW_{C1}\}+\cdots\cdots+\{W_{Cm}(F_{Cm}-2)/MW_{Cm}\}}{(W_{A1}+W_{A2}+\cdots\cdots+W_{Aj})+(W_{B1}+W_{B2}+\cdots\cdots+W_{Bk})+(W_{C1}+\cdots+W_{Cm})+(W_{D1}+\cdots+W_{Dn})} +
$$

$$
\left. \frac{\{W_{D1}(F_{D1}-2)/MW_{D1}\}+\cdots\cdots+\{W_{Dn}(F_{Dn}-2)/MW_{Dn}\}}{(W_{A1}+W_{A2}+\cdots\cdots+W_{Aj})+(W_{B1}+W_{B2}+\cdots\cdots+W_{Bk})+(W_{C1}+\cdots+W_{Cm})+(W_{D1}+\cdots+W_{Dn})} \right] \times 1000
$$

The urea bond content of the polyurethane (C) is 0.5 mol/kg or less, preferably 0.05 mol/kg or more, more preferably 0.1 mol/kg or more, from the viewpoint of solvent resistance and scratch resistance. On the other hand, the urea bond content is preferably 0.45 mol/kg or less, more preferably 0.25 mol/kg or less. The urea bond content of the polyurethane (C) in the present disclosure is greater than 0 mol/kg.

The urea bond content (mol/kg) of the polyurethane (C) can be determined by calculation in accordance with the following expression. In the following expression, each of j, k, and m is an integer of 1 or more.

$$
\text{Urea bond content (mol/kg)} = \{(W_{A1}/MW_{A1} \times F_{A1} + W_{A2}/MW_{A2} \times F_{A2} +...+
$$

$$
W_{Aj}/MW_{Bj} \times F_{Aj}) - (W_{B1}/MW_{B1} \times F_{B1} + W_{B2}/MW_{B2} \times F_{B2} +...+ W_{Bk}/MW_{Bk} \times F_{Bk} + W_{C1}/MW_{C1}
$$

$$
\times F_{C1} + W_{Cm}/MW_{Cm} \times F_{Cm})\} \times 10
$$

In the coating agent of the present disclosure, various commonly used additives can be used as long as the effects of the present invention are not hindered. Examples of such additives include weatherproofing agents, antibacterial agents, antifungal agents, fillers, rust inhibitors, pigments, dyes, film-forming aids, inorganic crosslinkers, organic crosslinkers (e.g. blocked isocyanate-based crosslinkers, epoxy-based crosslinkers, carbodiimide-based crosslinkers, oxazoline-based crosslinkers, and melamine-based crosslinkers), silane coupling agents, antiblocking agents, viscosity modifiers, leveling agents, antifoaming agents, dispersion stabilizers, light stabilizers, antioxidants, ultraviolet absorbers, inorganic and organic fillers, plasticizers, lubricants, and antistatic agents.

[Examples]

Hereinafter, the present invention will be described in detail by way of Examples and Comparative Examples, which should not be construed as limiting the present invention.

<Synthesis of aqueous polyurethane dispersion>

[Example 1]

65.00 Parts by mass of a polyester polyol (trade name "PCDL T-4671" manufactured by Asahi Kasei Chemicals Corporation; containing 1,4-butanediol and 1,6-hexanediol as raw materials; repeating unit: 1,4-butanediol/1,6-hexanediol = 7/3 (molar ratio); hydroxyl group value = 112.2 mg KOH/g; number average molecular weight = 1,000), 5.00 parts by mass of dimethylolpropionic acid (DMPA), and 100 parts by mass of methyl ethyl ketone were added in a four-necked flask equipped with a stirrer, a reflux condenser, a thermometer, and a nitrogen inlet tube, the mixture was sufficiently stirred and dissolved, 30.00 parts by mass of dicyclohexylmethane diisocyanate ($H_{12}$MDI) was then added, and the mixture was reacted at 75°C until the NCO content was 0.84%. The "NCO content" means the content of isocyanate groups. Thereafter, the prepolymer solution was cooled to 45°C, 3.77 parts by mass of triethylamine (TEA) was added as a neutralizing agent, the mixture was emulsified using a homomixer, and 0.65 parts by mass of diethylenetriamine (DETA) was then added, followed by chain extension reaction carried out at 30°C for 30 minutes. The methyl ethyl ketone was distilled off from the resin solution by heating at reduced pressure to obtain an aqueous polyurethane dispersion having a solid content of 25%. Table 1 below shows the weight average molecular weight (PP molecular weight) (Mw) of the urethane prepolymer (A), the degree of crosslinking (mol/kg) of the polyurethane (C), and the urea bond content (mol/kg) of the polyurethane (C).

[Examples 2 to 12 and Comparative Examples 1 to 4]

Except that the types and the charge amounts of the raw materials were changed as shown in Table 1 below, production was performed in the same manner as in Example 1 to obtain aqueous polyurethane dispersions. In Table 1, 1,4-CHDM means 1,4-cyclohexanedimethanol, EG means ethylene glycol, TMP means trimethylolpropane, and EDA means ethylenediamine. In addition, all of 1,4-CHDM, EG, and TMP correspond to the above-described polyol having a number average molecular weight of 400 or less.

[Preparation of coating layer]

The aqueous polyurethane dispersion was applied onto a polyethylene terephthalate substrate (PET manufactured by Toray Industries, Inc., Model No.: #100 T60) so as to have a thickness of about 20 μm, and dried at 80°C for 6 hours to prepare a coating layer.

[Evaluation of tackiness]

The state of the coated surface was visually observed when the coating layers were bonded to each other with a load of 500 g and peeled from each other. Score "○" was given when the coated surfaces did not adhere to each other, score "Δ" was given when the coated surfaces adhered to each other at 50% or more of the bonded area, and score "×" was given when the coated surfaces adhered to each other at the entire bonded area.

[Evaluation of Solvent Resistance]

A rubbing test was conducted ten times on the coating layer with a load of 500 g using a felt having a coating layer impregnated with a mixed solvent of ethyl acetate/toluene, and the state of the coated surface was visually observed. Score "○" was given when the coated surface was not changed, score "Δ" was given when the coated surface was eroded, and score "×" was given when the coating layer peeled.

[Self-restoring property]

The coated surface was rubbed back and forth five times using a brass wire brush (No. 9 manufactured by Fujiwara Sangyo Co., Ltd.) with a load of 500 g, and the degree of scratches on the cured film was visually observed. The evaluation was performed at a room temperature of 23°C. Score "o" was given when scratches were eliminated in 10 seconds or less, score "△" was given when it took about 10 seconds to 10 minutes for scratches to be eliminated, and score "×" was given when scratches were not eliminated even after 1 hour.

[Table 1]

Table 1

| | | | Example 1 | Example 2 | Example 3 | Example 4 | Example 5 | Example 6 | Example 7 | Example 8 | Example 9 | Example 10 | Example 11 | Example 12 | Comparative Example 1 | Comparative Example 2 | Comparative Example 3 | Comparative Example 4 |
|---|---|---|---|---|---|---|---|---|---|---|---|---|---|---|---|---|---|---|
| Composition | Polyol | T-4671[*1] | 65.00 | 65.00 | 62.60 | | | 55.00 | | | | | | | 59.00 | 66.50 | | |
| | | UH-50[*3] | | | | | | | 54.00 | | | | | | | | | |
| | | T-5651[*4] | | | | | | | | 65.00 | 66.00 | 66.00 | | | | | | |
| | | PTMG1000[*6] | | | | | | | | | | | | 65.00 | | | | |
| | | 1,4-CHDM | | | | | | 4.50 | | | | | | | | | 4.00 | 4.00 |
| | | EG | | | | | | | | | | | | | | | 3.10 | 3.10 |
| | | TMP | | | 0.65 | | | | | | | | | | | | | |
| | | DMPA | 5.00 | 5.00 | 5.00 | 5.00 | 5.00 | 5.00 | 5.00 | 5.00 | 5.00 | 5.00 | 5.00 | 5.00 | 5.00 | 5.00 | 7.20 | 7.20 |
| | Isocyanate | H₁₂MDI | 30.00 | 30.00 | 31.75 | 25.00 | 21.30 | 35.50 | 41.00 | 30.00 | 29.00 | 29.00 | 30.00 | 30.00 | 36.00 | 28.50 | 39.50 | 39.50 |
| | Total amount | | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 |
| | Amine extender | DETA | 0.65 | 0.65 | | 1.30 | 0.33 | 0.65 | 0.65 | 0.65 | 0.65 | 0.65 | 0.65 | 0.65 | | 0.40 | | |
| | | EDA | | | 0.72 | | | | | | | | | | 0.60 | | | |
| | Neutralizing agent | | TEA | NaOH | TEA | TEA | TEA | TEA | TEA | TEA | TEA | NaOH | TEA | TEA | TEA | TEA | | |
| Design | PP molecular weight | Mw | 10000 | 10000 | 10000 | 5000 | 20000 | 10000 | 10000 | 10000 | 20000 | 20000 | 10000 | 10000 | 2500 | 32500 | 20000 | 20000 |
| | Degree of crosslinking | (mol/kg) | 0.06 | 0.06 | 0.06 | 0.12 | 0.03 | 0.06 | 0.06 | 0.06 | 0.03 | 0.03 | 0.06 | 0.06 | 0.00 | 0.04 | 0.00 | 0.00 |
| | Urea content | (mol/kg) | 0.23 | 0.23 | 0.28 | 0.45 | 0.13 | 0.23 | 0.23 | 0.23 | 0.13 | 0.13 | 0.23 | 0.23 | 0.90 | 0.10 | 0.00 | 0.00 |
| Tackiness | | | ○ | ○ | ○ | ○ | ○ | ○ | ○ | ○ | ○ | ○ | ○ | ○ | ○ | △ | × | × |
| Solvent resistance | | | ○ | ○ | ○ | ○ | ○ | ○ | ○ | ○ | ○ | ○ | ○ | ○ | ○ | △ | × | × |
| Self-restoring properties | | | ○ | ○ | ○ | ○ | ○ | ○ | ○ | ○ | ○ | ○ | ○ | ○ | △ | ○ | × | × |

*1: Trade name "PCDL T-4671" manufactured by Asahi Kasei Chemicals Corporation; containing 1,4-butanediol and 1,6-hexanediol as raw materials; repeating unit: 1,4-butanediol/1,6-hexanediol = 7/3 (molar ratio);
hydroxyl group value = 112.2 mg KOH/g; number average molecular weight = 1,000

*2: Trade name "PCDL T-4672" manufactured by Asahi Kasei Chemicals Corporation; containing 1,4-butanediol and 1,6-hexanediol as raw materials; repeating unit: 1,4-butanediol/1,6-hexanediol = 7/3 (molar ratio);
hydroxyl group value = 56.1 mg KOH/g; number average molecular weight = 2,000

*3: Trade name "ETERNACOLL UH-50" manufactured by Ube Industries, LTD. ; containing 1,6-hexanediol as raw materials; hydroxyl group value = 224.4 mg KOH/g; number average molecular weight = 500

*4: Trade name "PCDL T-5651" manufactured by Asahi Kasei Chemicals Corporation; containing 1,5-pentanediol and 1,6-hexanediol as raw materials; repeating unit: 1,5-pentanediol/1,6-hexanediol = 1/1 (molar ratio);
hydroxyl group value = 112.2 mg KOH/g; number average molecular weight = 1,000

*5: Trade name "Kuraray Polyol P-1010" manufactured by Kuraray Co., LTD. ; containing 3-methyl-1,5-pentanediol and adipic acid as raw materials; hydroxyl group value = 112.2 mg KOH/g; number average molecular weight = 1,000

*6: Trade name "PTMG1000" manufactured by Mitsubishi Chemical Corporation ; polytetramethylene glycol; number average molecular weight = 1,000

As shown in Table 1, it was found that the self-restoring properties were deteriorated when the aqueous polyurethane dispersion had a high urea bond content (Comparative Example 1), and the tackiness and the solvent resistance were deteriorated when the urethane prepolymer had a large weight average molecular weight (Comparative Example 2). When chain extension was performed with water, i.e. the urea bond content was 0 (mol/kg), all of tackiness, solvent resistance, and self-restoring properties were deteriorated (Comparative Examples 3 and 4).

[Industrial Applicability]

The aqueous dispersion of the present invention can be used as a coating agent. In particular, the aqueous dispersion has good self-restoring properties as well as good tackiness and solvent resistance, and therefore can be suitably used in fields where such performance is required.

**Claims**

1. An aqueous polyurethane dispersion in which a polyurethane (C) obtained by reacting a urethane prepolymer (A) obtained by reacting a polyisocyanate (a), a polyol (b), and a hydrophilic group-containing polyol (c) with a chain extender (B) is dispersed in water,

    the urethane prepolymer (A) having a weight average molecular weight of 2,000 or more and 30,000 or less,
    the polyurethane (C) having a degree of crosslinking of 0.03 mol/kg or more and 0.15 mol/kg or less,
    the polyurethane (C) having a urea bond content of 0.5 mol/kg or less.

2. The aqueous polyurethane dispersion according to claim 1, wherein the urethane prepolymer (A) has a weight average molecular weight of 5,000 or more and 15,000 or less.

3. The aqueous polyurethane dispersion according to claim 1 or 2, wherein the polyurethane (C) has a degree of crosslinking of 0.05 mol/kg or more and 0.10 mol/kg or less.

4. The aqueous polyurethane dispersion according to any one of claims 1 to 3, wherein the polyurethane (C) has a urea bond content of 0.1 mol/kg or more and 0.25 mol/kg or less.

5. The aqueous polyurethane dispersion according to any one of claims 1 to 4, wherein the polyisocyanate (a) contains an alicyclic polyisocyanate.

6. The aqueous polyurethane dispersion according to any one of claims 1 to 5, wherein the polyol (b) contains at least one selected from the group consisting of a polyester polyol, a polycarbonate diol, and a polyether polyol.

7. The aqueous polyurethane dispersion according to any one of claims 1 to 6, wherein the polyol (b) has a number average molecular weight of 400 or more and 3,000 or less.

8. The aqueous polyurethane dispersion according to any one of claims 1 to 7, wherein the hydrophilic group in the hydrophilic group-containing polyol (c) is an anionic hydrophilic group.

9. The aqueous polyurethane dispersion according to claim 8, wherein the polyurethane (C) has an acid value of 10 mg KOH/g or more and 45 mg KOH/g or less.

10. The aqueous polyurethane dispersion according to any one of claims 1 to 9, wherein the urethane prepolymer (A) contains the polyisocyanate (a) in an amount of 15 parts by mass or more and 45 parts by mass or less based on 100 parts by mass of the urethane prepolymer (A).

11. The aqueous polyurethane dispersion according to any one of claims 1 to 10, wherein the urethane prepolymer (A) contains the polyol (b) in an amount of 50 parts by mass or more and 80 parts by mass or less based on 100 parts by mass of the urethane prepolymer (A).

12. The aqueous polyurethane dispersion according to any one of claims 1 to 11, wherein the urethane prepolymer (A) contains the hydrophilic group-containing polyol (c) in an amount of 1 part by mass or more and 10 parts by mass or less based on 100 parts by mass of the urethane prepolymer (A).

13. The aqueous polyurethane dispersion according to any one of claims 1 to 12, wherein the chain extender (B) contains a polyamine.

14. The aqueous polyurethane dispersion according to any one of claims 1 to 13, wherein the polyurethane (C) contains the chain extender (B) in an amount of 0.4 parts by mass or more and 1.0 part by mass or less based on 100 parts by mass of the urethane prepolymer (A).

15. A coating agent comprising the aqueous polyurethane dispersion according to any one of claims 1 to 14.

**EP 3 950 863 A1**

<table>
<tr><td align="center">INTERNATIONAL SEARCH REPORT</td><td>International application No.<br>PCT/JP2020/011146</td></tr>
</table>

A. CLASSIFICATION OF SUBJECT MATTER
Int. Cl. C09D175/04(2006.01)i, C08G18/00(2006.01)i, C08G18/10(2006.01)i,
C08G18/65(2006.01)i
FI: C08C18/00 C, C09D175/04, G08C18/10, C08C18/65
According to International Patent Classification (IPC) or to both national classification and IPC

B. FIELDS SEARCHED

Minimum documentation searched (classification system followed by classification symbols)
Int. Cl. C09D175/04, C08G18/00, C08G18/10, C08G18/65

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-129008 A (DAI-ICHI KOGYO SEIYAKU CO., LTD.) 09 May 2002, entire text | 1-15 |
| A | JP 2007-277377 A (DAI-ICHI KOGYO SEIYAKU CO., LTD.) 25 October 2007, entire text | 1-15 |
| A | JP 2013-18805 A (ASAHI KASEI CHEMICALS CORP.) 31 January 2013, entire text | 1-15 |

☐ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>13.05.2020 | Date of mailing of the international search report<br>26.05.2020 |
|---|---|
| Name and mailing address of the ISA/<br>　Japan Patent Office<br>　3-4-3, Kasumigaseki, Chiyoda-ku,<br>　Tokyo 100-8915, Japan | Authorized officer<br><br>Telephone No. |

Form PCT/ISA/210 (second sheet) (January 2015)

13

**INTERNATIONAL SEARCH REPORT**
Information on patent family members

International application No.

PCT/JP2020/011146

| Patent Documents referred to in the Report | Publication Date | Patent Family | Publication Date |
|---|---|---|---|
| JP 2002-129008 A | 09.05.2002 | (Family: none) | |
| JP 2007-277377 A | 25.10.2007 | (Family: none) | |
| JP 2013-18805 A | 31.01.2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019057542 A

- JP 2013018805 A